# EUROPÄISCHE PATENTANMELDUNG

(11) **EP 0 676 571 A1**
(43) Veröffentlichungstag der Anmeldung: **11.10.1995**
(21) Anmeldenummer: 95105218.2
(22) Anmeldetag: 06.04.1995
(51) Int. Cl.: F16K 1/22, F16K 25/04

(54) **Schutzschild für Absperrklappe**

(30) Priorität: 06.04.1994 DE 9405727 U
(71) Anmelder: CHEMAT GmbH Armaturen für Industrie- und Nuklearanlagen, D-77871 Renchen (DE)
(72) Erfinder: Braig, Hans, F-67720 Hoerdt (FR)
(74) Vertreter: Betten & Resch

(57) **Zusammenfassung**

Eine Absperrklappe als Armatur für flüssige oder gasförmige Medien umfaßt einen Schutzschild (38), welcher der Dichtfläche (36) der in Offenstellung befindlichen Klappenscheibe (32) vorgelagert ist, um die Dichtfläche (36) vor im Medienstrom enthaltenen abrasiven Partikeln zu schützen, wodurch die Standzeit der Absperrklappe deutlich verlängert wird.

## Beschreibung

Die Erfindung betrifft eine Absperrklappe als Armatur für flüssige oder gasförmige Medien, mit einem Armaturengehäuse, einer Medien-Durchgangsöffnung im Armaturengehäuse und einer in der Durchgangsöffnung angeordneten und am Armaturengehäuse um eine Drehachse verschwenkbar gelagerten Klappenscheibe, die eine umfangsmäßig verlaufende Dichtfläche aufweist und zwischen einer Schließstellung, in der sie die Durchgangsöffnung dichtend verschließt, und einer Offenstellung verschwenkbar ist.

Solche Absperrklappen sind allgemeiner Stand der Technik. Sie werden insbesondere bei größeren Nennweiten oftmals anstelle der alternativ verwendbaren Kugelhähne eingesetzt, nachdem sie kostengünstiger als Kugelhähne sind.

Andererseits kommen zum Absperren von flüssigen oder gasförmigen Medien, in denen sich abrasive Partikel befinden, in den meisten Fällen Kugelhähne zum Einsatz. Je nach Druck, Temperatur und Medium werden diese Kugelhähne in ihren Einzelteilen entsprechend modifiziert, um den abrasiven Bedingungen standhalten zu können; beispielsweise werden auf den Kugeln Hartstoffbelage aufgebracht und die Kugeldichtungen werden aus teilweise metallischen Werkstoffen gefertigt.

Solchermaßen modifizierte Kugelhähne liegen im Anschaffungspreis je nach Ausstattung jedoch sehr hoch und müssen dennoch aufgrund der unvermeidbaren Abnutzung repariert bzw. ausgetauscht werden. Ein weiterer Nachteil von Kugelhähnen besteht darin, daß sie oftmals Toträume haben, in denen sich abrasive Stoffe ansetzen können, so daß die Funktion des Kugelhahns beeinträchtigt wird.

Demgegenüber haben Absperrklappen gegenüber Kugelhähnen den Vorteil, daß sie keine bzw. nur sehr geringe Toträume aufweisen und das obengenannte Problem daher praktisch nicht auftritt. Bei abrasiven Medien nimmt man vom Einsatz von Absperrklappen jedoch Abstand, da bei geöffneter Absperrklappe die dem Medienstrom zugewandte Dichtfläche der Klappenscheibe der Abrasion voll ausgesetzt ist und daher nach einiger Betriebszeit die Dichtfunktion der Klappenscheibe in der Schließstellung durch die Beschädigung der Dichtfläche beeinträchtigt wird.

Der Erfindung liegt die Aufgabe zugrunde, die Absperrklappe der eingangs genannten Gattung so weiterzubilden, daß beim Einsatz abrasiver Medien das Problem der Dichtflächenbeschädigung der Klappenscheibe reduziert oder ausgeschaltet wird.

Zur Lösung dieser Aufgabe ist erfindungsgemäß vorgesehen, daß in der Durchgangsöffnung außerhalb des Bewegungsbereichs der Klappenscheibe ein langgestrecker Schutzschild angeordnet ist, der sich im allgemeinen in Richtung parallel zur Drehachse erstreckt und zumindest in der Offenstellung der Klappenscheibe in Strömungsrichtung des Mediums gesehen der stromaufwärts gelegenen Dichtfläche der Klappenscheibe vorgelagert ist.

Es wird also erfindungsgemäß ein zusätzlich angebrachter Schutzschild vorgeschlagen, der bei geöffneter, insbesondere voll geöffneter Klappe die Dichtfläche der Klappenscheibe gegen anströmende Feststoffpartikel abschirmt. Zweckmäßigerweise ist der Schutzschild relativ zum Armaturengehäuse starr befestigt, so daß er die Dichtfläche der Klappenscheibe in einer ganz bestimmten Öffnungsposition, üblicherweise in derjenigen Öffnungsposition, in der die Klappenscheibe parallel zur allgemeinen Strömungsrichtung des Mediums ausgerichtet ist, abschirmt. Der Schutzschild kann hierbei am Armaturengehäuse angeschraubt oder angeschweißt oder er kann in alternativer Weise an einem am Armaturengehäuse anzusetzenden Anschlußflansch o. dgl. befestigt sein oder zwischen Armaturengehäuse und Anschlußflansch klemmbar sein.

Grundsätzlich ist es jedoch auch möglich, den Schutzschild relativ zum Armaturengehäuse schwenkbar, insbesondere um eine zur Drehachse der Klappenscheibe parallele Achse schwenkbar zu lagern, wobei über einen Mitnahmemechanismus der Schutzschild von der sich öffnenden Klappenscheibe in die jeweilige Öffnungsstellung mitgenommen und beim Schließen der Klappe wieder zurückgeführt wird.

In vorteilhafter Weiterbildung der Erfindung ist die Konstruktion des Schutzschildes derart, daß die stromabwärts gelegene Seite des Schutzschildes in der Ebene seiner Längserstreckung im wesentlichen kreisbogenförmig gekrümmt ausgebildet ist, wobei der Krümmungsradius der stromabwärts gelegenen Seite dem Radius der Klappenscheibe im wesentlichen entspricht; vorzugsweise liegt die stromabwärts gelegene Seite des Schutzschildes der Dichtfläche der Klappenscheibe in deren Öffnungsstellung unter einem sehr geringen Abstand gegenüber, wobei lediglich die Fertigungs- und Montagetoleranzen einzuhalten sind, um eine Behinderung der Bewegung der Klappenscheibe durch den Schutzschild mit Sicherheit auszuschließen. Hierdurch wird die Dichtfläche der Klappenscheibe optimal geschützt.

Zweckmäßigerweise ist die stromaufwärts gelegene Seite des Schutzschildes in der Ebene seiner Längserstreckung ebenfalls im allgemeinen kreisbogenförmig gekrümmt ausgebildet, so daß der Schutzschild insgesamt die Form eines schmalen Kreisringsegments einnehmen kann. Die quer zur Strömungsrichtung gemessene Breite des Schutzschildes ist zweckmäßigerweise mindestens gleich der Dicke der Klappenscheibe, vorzugsweise jedoch geringfügig größer, um einen optimalen Schutz auch der Kantenbereiche der Dichtflächen sicherzustellen.

In weiterer vorteilhafter Weiterbildung der Erfindung kann der Schutzschild, der regelmäßig im wesentlichen aus einem geeigneten Metall bestehen wird, zumindest an seiner stromaufwärts gelegenen Seite mit einer Hartstoff-Beschichtung versehen sein, insbesondere mit einer Email-Beschichtung, um die den abrasiven Partikeln ausgesetzte Seite des Schutzschildes zusätzlich zu schützen. Die Art des Hartstoffbelages kann entsprechend dem einzusetzenden Medium ausgewählt werden.

Gemäß einem besonders vorteilhaften Merkmal der Erfindung ist weiterhin vorgesehen, daß der Schutzschild an seiner stromaufwärts gelegenen Seite einen in der Ebene senkrecht zu seiner Längserstreckung gesehen gekrümmten Querschnitt aufweist, der aerodynamisch bzw. strömungstechnisch optimiert ist. Hierdurch kann erreicht werden, daß aufgrund der strömungstechnisch günstigen Form des Schutzschildes der Medienstrom laminar an der geöffneten Klappenscheibe vorbeiströmt.

Dieser weitere Vorteil des erfindungsgemäßen Schutzschildes wirkt sich insbesondere bei Absperrklappen mit exzentrisch oder doppelexzentrisch gelagerten Klappenscheiben aus, die, verglichen mit Absperrklappen mit zentrisch gelagerten Klappenscheiben, wesentlich dickere Klappenscheiben mit wesentlich breiteren Dichtflächen aufweisen, die aus konstruktiven Gründen nicht strömungstechnisch günstig gestaltet werden können.

Aufgrund der vorliegenden Erfindung ist es möglich, die Standzeit von Absperrklappen bei abrasiven Medien enorm zu erhöhen, so daß die konstruktiven und preislichen Vorteile von Absperrklappen gegenüber Kugelhähnen voll zum Tragen kommen.

Im folgenden wird ein Ausführungsbeispiel der Erfindung im Zusammenhang mit einer Absperrklappe mit doppelexzentrisch gelagerter Klappenscheibe anhand der Zeichnung näher beschrieben. In der Zeichnung zeigen:
- Figur 1: einen Schnitt durch eine Absperrklappe mit einer in Öffnungsposition befindlichen Klappenscheibe sowie einem erfindungsgemäßen Schutzschild und
- Figur 2: einen Schnitt durch die Absperrklappe gemäß Figur 1 in einer Ebene senkrecht zur Darstellungsebene gemäß Figur 1.

In den Figuren ist mit der Bezugsziffer 10 ein Armaturengehäuse bezeichnet, welches zwei koaxiale, miteinander verschraubte Gehäuseteile 12, 14 umfaßt. Das Armaturengehäuse weist eine zylindrische Durchgangsöffnung 18 für flüssige oder gasförmige Medien auf. Beidseitig des Armaturengehäuses 10 sind unter Zwischenlegung von Dichtungen 20, 22 Anschlußflansche 24, 26 angesetzt, die beispielsweise über nicht dargestellte, geeignete Schraubbolzen miteinander verbunden sind und das Armaturengehäuse 10 zwischen sich klemmen.

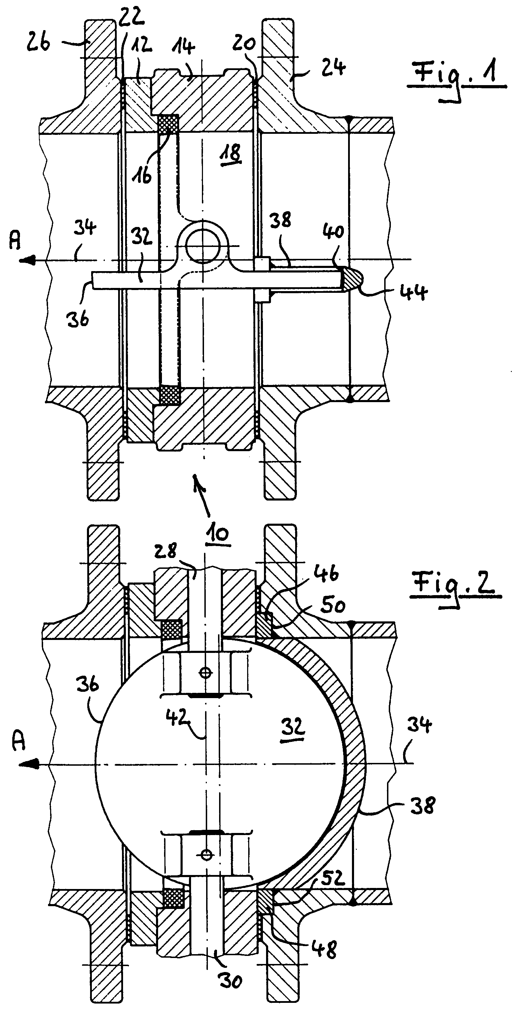

Im Armaturengehäuse 10 ist über Wellen 28, 30, von denen die Welle 28 antreibbar ist, eine Klappenscheibe 32 schwenkbar gelagert. In den Figuren ist die Klappenscheibe in ihrer geöffneten Position dargestellt, in der sie sich parallel zur Achse 34 der Durchgangsöffnung 18 des Armaturengehäuses 10 befindet; in Figur 1 ist zusätzlich die geschlossene Position der Klappenscheibe 32 strichpunktiert dargestellt, in der sich die Klappenscheibe senkrecht zur Achse 34 ausgerichtet befindet und über ihre stirnseitig umfangsmäßig verlaufende Dichtfläche 36 an einer Dichtung 16, die zwischen den Gehäuseteilen 12 und 14 gehalten ist, dichtend anliegt. Die Klappenscheibe 32 ist im Armaturengehäuse derart doppelexzentrisch gelagert, daß sich die Klappenscheibe bei Beginn der Öffnungsbewegung von der Dichtung 16 abhebt, wodurch ein geringer Sitzverschleiß resultiert und das erforderliche Drehmoment reduziert wird. Die vorstehend beschriebene Absperrklappe mit doppelexzentrisch gelagerter Klappenscheibe ist Stand der Technik.

Ein ingesamt mit der Bezugsziffer 38 bezeichneter Schutzschild ist in der vom Armaturengehäuse bzw. dem hieran anschließenden Rohrsystem definierten Durchgangsöffnung außerhalb des Bewegungsbereichs der Klappenscheibe 32 und in allgemeiner Strömungsrichtung des Mediums, die mit dem Pfeil A gekennzeichnet ist, vor der Klappenscheibe 32 angeordnet. Der Schutzschild 38 weist in der Seitenansicht gemäß Figur 2 eine kreisringsegmentförmige Gestalt auf. Er liegt mit seiner stromabwärts gelegenen Seite 40 der stromaufwärts weisenden Dichtfläche 36 der Klappenscheibe 32 in der dargestellten, geöffneten Position der Klappenscheibe 32 unter Bildung eines nur engen Spalts in der Größenordnung von 0,5 - 5mm gegenüber. Die quer zur Achse 34 gemessene Dicke des Schutzschildes 38 ist etwas größer als die Dicke der Klappenscheibe 32, beispielsweise um 5% bis 50% dicker. Der gekrümmte, langgestreckte Schutzschild 38 erstreckt sich in seiner Längsrichtung im wesentlichen parallel zur Drehachse 42 der Klappenscheibe 32 oder, anders ausgedrückt, die Hauptebene des Schutzschildes 38 stimmt mit der Hauptebene der sich in Öffnungsposition befindlichen Klappenscheibe 32 überein.

Wie aus Figur 1 deutlich wird, ist die stromaufwärts gelegene Seite 44 des Schutzschildes 38 etwa parabelförmig gekrümmt; im einzelnen ist diese Krümmung so auszubilden, daß sie aerodynamisch bzw. strömungstechnisch günstig bzw. optimal ist, wodurch erreicht werden soll, daß das Medium laminar an der geöffneten Klappenscheibe 32 vorbeiströmt.

Insbesondere die stromaufwärts gelegene Seite 44 des Schutzschildes kann in nicht dargestellter Weise mit einem Hartstoffbelag, z.B. Email beschichtet sein, um so eine besonders hohe Verschleißfestigkeit gegen abrasive Partikel im Medienstrom aufzuweisen.

Der Schutzschild 38 kann in jeder geeigneten Weise am Armaturengehäuse 10 bzw. dem diesem vorgelagerten Anschlußflansch 24 befestigt sein, also beispielsweise festgeschraubt oder angeschweißt sein oder er kann, wie im Falle des dargestellten Ausführungsbeispiels, zwischen Armaturengehäuse 10 und Anschlußflansch 24 eingeklemmt sein. Hierzu sind an den beiden Enden des Schutzschildes 38 sich radial erstreckende Ansätze 46, 48 ausgebildet, die in entsprechend geformte Ausnehmnungen 50, 52 am Anschlußflansch 24 einsetzbar und hierin in ihrer Sollposition gehalten sind.

Wie aus den Darstellungen gemäß Figuren 1 und 2 deutlich wird, schützt der erfindungsgemäße Schutzschild 38 die stromaufwärts gelegene Dichtfläche 36 der Klappenscheibe 32 zuverlässig vor dem Aufprall von sich im Medienstrom befindlichen abrasiven Partikeln und verlängert somit die Standzeit der Absperrklappe entscheidend.

### Bezugszifferliste

- 10: Armaturengehäuse
- 12: Gehäuseteil
- 14: Gehäuseteil
- 16: Dichtung
- 18: Durchgangsöffnung
- 20: Dichtung
- 22: Dichtung
- 24: Anschlußflansch
- 26: Anschlußflansch
- 28: Welle
- 30: Welle
- 32: Klappenscheibe
- 34: Achse
- 36: Dichtfläche
- 38: Schutzschild
- 40: stromabwärts gelegene Seite
- 42: Drehachse
- 44: stromaufwärts gelegene Seite
- 46: Ansatz
- 48: Ansatz
- 50: Ausnehmung
- 52: Ausnehmung

## Patentansprüche

1. Absperrklappe als Armatur für flüssige oder gasförmige Medien, mit einem Armaturengehäuse (10), einer Medien-Durchgangsöffnung (18) im Armaturengehäuse und einer in der Durchgangsöffnung angeordneten und am Armaturengehäuse um eine Drehachse (42) verschwenkbar gelagerten Klappenscheibe (32), die eine umfangsmäßig verlaufende Dichtfläche (36) aufweist und zwischen einer Schließstellung, in der sie die Durchgangsöffnung dichtend verschließt, und einer Offenstellung verschwenkbar ist, dadurch gekennzeichnet, daß in der Durchgangsöffnung (18) außerhalb des Bewegungsbereichs der Klappenscheibe (32) ein langgestreckter Schutzschild (38) angeordnet ist, der sich im allgemeinen in Richtung parallel zur Drehachse (42) erstreckt und zumindest in der Offenstellung der Klappenscheibe (32) in Strömungsrichtung (A) des Mediums gesehen der stromaufwärts gelegenen Dichtfläche (36) der Klappenscheibe vorgelagert ist.

2. Absperrklappe nach Anspruch 1, dadurch gekennzeichnet, daß der Schutzschild (38) relativ zum Armaturengehäuse (10) starr befestigt ist.

3. Absperrklappe nach Anspruch 1 oder 2, dadurch gekennzeichnet, daß die stromabwärts gelegene Seite (40) des Schutzschildes (38) in der Ebene seiner Längserstreckung im wesentlichen kreisbogenförmig gekrümmt ausgebildet ist, wobei der Krümmungsradius der stromabwärts gelegenen Seite (40) dem Radius der Klappenscheibe (32) im wesentlichen entspricht.

4. Absperrklappe nach Anspruch 3, dadurch gekennzeichnet, daß die stromabwärts gelegene Seite (40) des Schutzschildes (38) der Dichtfläche (36) der Klappenscheibe (32) in deren Offenstellung unter geringem Abstand gegenüberliegt.

5. Absperrklappe nach einem der vorhergehenden Ansprüche, dadurch gekennzeichnet, daß die stromaufwärts gelegene Seite (44) des Schutzschildes (38) in der Ebene seiner Längserstreckung im allgemeinen kreisbogenförmig gekrümmt ausgebildet ist.

6. Absperrklappe nach einem der vorhergehenden Ansprüche, dadurch gekennzeichnet, daß die quer zur Strömungsrichtung (A) gemessene Breite des Schutzschildes (38) mindestens gleich ist der Dicke der Klappenscheibe (32).

7. Absperrklappe nach einem der vorhergehenden Ansprüche, dadurch gekennzeichnet, daß der Schutzschild (38) zumindest an seiner stromaufwärts gelegenen Seite (44) mit einer Hartstoff-Beschichtung versehen ist.

8. Absperrklappe nach Anspruch 7, dadurch gekennzeichnet, daß Hartstoff-Beschichtung eine Email-Beschichtung ist.

9. Absperrklappe nach einem der vorhergehenden Ansprüche, dadurch gekennzeichnet, daß der Schutzschild (38) an seiner stromaufwärts gelegenen Seite (44) einen in der Ebene senkrecht zu seiner Längserstreckung gesehen gekrümmten Querschnitt aufweist.

10. Absperrklappe nach Anspruch 9, dadurch gekennzeichnet, daß der Querschnitt aerodynamisch bzw. strömungstechnisch optimiert ausgebildet ist.

11. Schutzschild für eine Absperrklappe nach dem Oberbegriff des Anspruchs 1, gekennzeichnet durch die kennzeichnenden Merkmale nach einem der Ansprüche 1 bis 10.
